# EUROPEAN PATENT APPLICATION

(11) **EP 2 849 132 A1**
(43) Date of publication of application: **18.03.2015**
(21) Application number: 14184173.4
(22) Date of filing: 10.09.2014
(51) Int. Cl.: G06Q 10/08

(54) **Sensor information management device and sensor information management method**

(30) Priority: 11.09.2013 JP 2013188855
(71) Applicant: Kabushiki Kaisha Toshiba, Minato-ku Tokyo 105-8001 (JP)
(72) Inventor: Watanabe, Yuka, Tokyo 105-8001 (JP); Maeda, Masaya, Tokyo 105-8001 (JP); Hamamura, Tomoyuki, Tokyo 105-8001 (JP); Piao, Ying, Tokyo 105-8001 (JP); Irie, Bunpei, Tokyo 105-8001 (JP)
(74) Representative: Horn Kleimann Waitzhofer

(57) **Abstract**

A sensor information management device of an embodiment includes an image input section, an image display section, an operation section, an operation information storage section, and an output section. The image input section obtains an image from each of multiple image sensors that are installed at different positions or different angles from one another and image goods. The image display section displays multiple images obtained from the multiple image sensors. The operation section receives input of operation content for at least one image among the displayed multiple images. The operation information storage section stores operation information based on the operation content. The output section outputs the operation information stored in the operation information storage section.

## Description

### FIELD

Embodiments of the present invention relate to a sensor information management device and a sensor information management method.

### BACKGROUND

Recently, a package processing device has been used. A package has a shape of, for example, a hexahedron, and a shipping bill such as a delivery ticket on which sorting destination information is described is attached to at least one face of the package. The package processing device captures images of the package from multiple angles, and acquires multiple images. The package processing device reads the sorting destination information described on the shipping bill based on these images, and sorts the package by destination based on the read sorting destination information.

In this case, it is desirable to obtain an image from which the sorting destination information is easy to read. However, if any malfunction is present in an imaging device or other devices, such an image may not be obtained. Thus, in order to efficiently perform a sorting process, it is desirable to grasp whether a malfunction is occurring in the package processing device and to improve the package processing device if a malfunction is present.

For example, a technique of grasping whether or not a malfunction is present in an image itself based on density of the image captured by a scanner has been proposed.

In the package processing device, it is also possible to diagnose whether or not a malfunction is present based on a recognition rate at which the sorting destination information is recognized in the image. However, such a recognition rate may also be reduced by factors other than a failure of the imaging device. For this reason, such a failure diagnosis method has low reliability.

### BRIEF DESCRIPTION OF THE DRAWINGS

Fig. 1 is a schematic configuration diagram illustrating a configuration of a delivery processing system in a first embodiment.
Fig. 2 is a flow chart illustrating processing of a sensor information management device.
Fig. 3 is a diagram representing an example of an image displayed on an image display section.
Fig. 4 is a diagram representing an example of a detailed image displayed on the image display section.
Fig. 5 is a diagram illustrating an example of operation information stored in an operation information storage section.
Fig. 6 is a diagram illustrating an example of an image displayed on the image display section when a reason for cancellation is input.
Fig. 7 is a schematic configuration diagram illustrating a configuration of a delivery processing system to which a sensor information management device in a second embodiment is applied.
Fig. 8 is a diagram representing an example of a screen when an operation of selecting a region in an image list is performed.
Fig. 9 is a diagram representing an example of a screen when an operation of selecting a region in the detailed image is performed.

### DETAILED DESCRIPTION

A sensor information management device of an embodiment includes an image input section, an image display section, an operation section, an operation information storage section, and an output section. The image input section obtains an image from each of multiple image sensors that are installed at different positions or different angles from one another and image goods. The image display section displays multiple images obtained from the multiple image sensors. The operation section receives input of operation content for at least one image among the displayed multiple images. The operation information storage section stores operation information based on the operation content. The output section outputs the operation information stored in the operation information storage section.

A sensor information management method of an embodiment is a sensor information management method of a sensor information management device having an image input section, an image display section, an operation section, an operation information storage section, and an output section. The image input section obtains an image from each of multiple image sensors that are installed at different positions or different angles from one another and image goods. The image display section displays multiple images obtained from the multiple image sensors. The operation section receives input of operation content for at least one image among the displayed multiple images. The operation information storage section stores operation information based on the operation content. The output section outputs the operation information that is read from the operation information storage section and is based on the operation content.

According to the sensor information management device and sensor information management method described above, it is possible to improve reliability in a failure diagnosis.

Hereinafter, a sensor information management device according to an embodiment will be described with reference to the drawings.

### «First Embodiment»

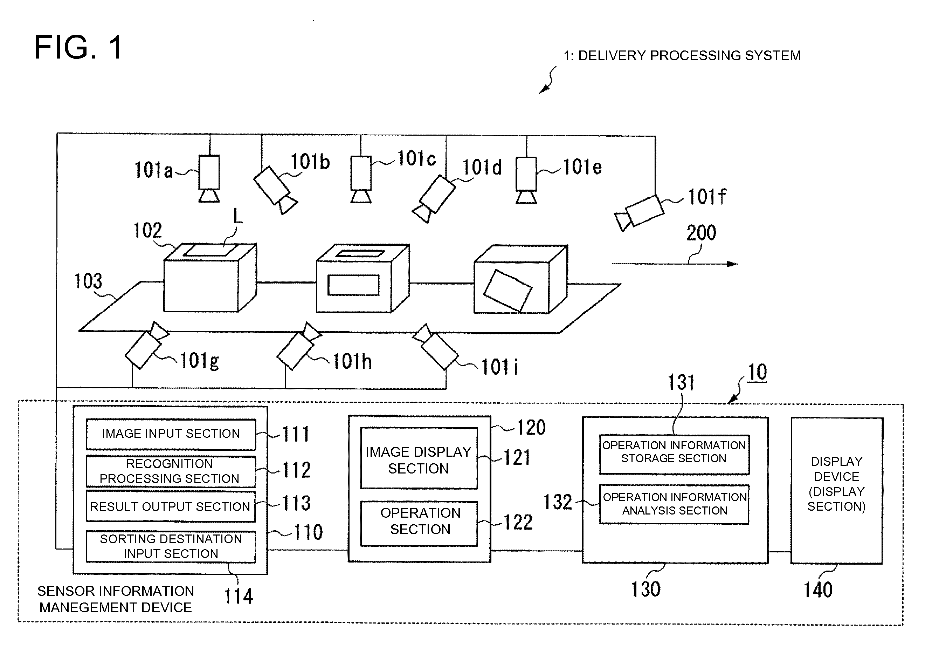

Fig. 1 is a schematic configuration diagram illustrating a configuration of a delivery processing system 1 in a first embodiment.

The delivery processing system 1 includes image sensors 101a, 101b, 101c, 101d, 101e, 101f, 101g, 101h, and 101i (hereinafter, when each image sensor is not specified, each image sensor is simply referred to as an image sensor 101), a conveying device 103, and a sensor information management device 10.

The image sensor 101 captures an image of a delivery 102 (goods) conveyed by the conveying device 103. These image sensors 101 are installed at different positions or different angles from one another. Each image sensor 101 is installed such that all faces (for example, six faces) of the delivery 102 are imaged by the multiple image sensors 101. Each image sensor 101 is provided so as to face at least one face of the delivery 102. Each image sensor 101 captures an image of at least one face of the delivery 102. An imaging window (transparent window) is formed at a part of the conveying device 103, and at least one of the image sensors 101 can capture an image of a bottom face of the delivery 102 via the imaging window. The image sensors 101 can also be installed at different angles at the same position, and the image sensors 101 can also be installed at the same angle at different positions.

For example, the image sensor 101a is installed at an angle at which a top face of the delivery 102 can be imaged at a position above the conveying device 103. The image sensor 101b is installed at an angle at which a lateral face of the delivery 102 can be imaged at a position above the conveying device 103. The image sensor 101d is installed at an angle at which a lateral face of the delivery 102 which is different from the lateral face imaged by the image sensor 101b can be imaged at a position above the conveying device 103. Furthermore, the image sensor 101f is installed at an angle at which two or more of faces of the delivery 102 can be imaged at a position above the conveying device 103.

At least one of the image sensors 101 is set so as to capture an image at a wide angle such that the entire delivery 102 can be placed at an angle of view of the image sensor 101.

The image sensor 101 can use, for example, a line sensor that captures an image of the delivery 102 during conveyance per line.

An appearance of the delivery 102 includes various external shapes. Furthermore, a face of the delivery 102 to which a shipping bill L is attached is not necessarily constant. Further, the delivery 102 is not necessarily conveyed in the same direction. However, as the multiple image sensors 101 are configured as described above, an image of each face of the delivery 102 can be created, and these images can be output to a sorting destination recognizing device 110 in conjunction with the image sensors 101. For example, when one delivery 102 is conveyed to an imaging position of each image sensor 101 by the conveying device 103, each image sensor 101 captures the image of the delivery 102, and creates the image of the delivery 102. That is, even when the face of the delivery 102 to which the shipping bill L is attached is not constant, even when the position on the face of the delivery 102 to which the shipping bill L is attached is not constant or even when the direction in which the delivery 102 is conveyed is not constant, any of the image sensors 101 can capture an image of the shipping bill.

The delivery 102 is a polyhedron, for example, a hexahedron, and the shipping bill L on which sorting destination information is described is annexed (for example, attached) to at least one face of the delivery 102. The shipping bill L has a sorting destination information column in which the sorting destination information (address information and the like) indicating a destination of the delivery 102 is described, a client information column in which address information of a client is described, a bar code column in which a bar code unique to the shipping bill L is described, other information columns, and the like. Each piece of information is described in each column by handwriting or printing. The sorting destination information includes, for example, all or some of a prefecture name, a municipality name, and a block number. The sorting destination information can also include a name (an association name or an individual name) of the destination.

The conveying device 103 conveys the delivery 102 supplied from an upstream side to a downstream side (in the direction indicated by reference number 200). The conveying device 103 is, for example, a belt conveyor.

The sensor information management device 10 includes the sorting destination recognizing device 110, a video coding system (hereinafter abbreviated to a "VCS") 120, an operation information analysis device 130, and a display device 140.

The sorting destination recognizing device 110 recognizes a sorting destination of the delivery 102 based on the images obtained from the image sensors 101. The sorting destination recognizing device 110 includes an image input section 111, a recognition processing section 112, a result output section 113, and a sorting destination input section 114.

The image input section 111 obtains an image from each of the image sensors 101.

The recognition processing section 112 recognizes the sorting destination information in the obtained image. For example, the recognition processing section 112 stores dictionary data in which reference letters are stored, and destination data in which an address candidate representing an address that may be described in the sorting destination information column is stored. The recognition processing section 112 detects a description region of the sorting destination information column from the image of each face of the delivery 102, detects a letter string from the detected description region, and detects each letter included in the letter string. When detecting each letter, the recognition processing section 112 calculates similarity between the detected letters and the letters registered with the dictionary data, thereby extracting a letter candidate that is a similar letter for each letter. The recognition processing section 112 extracts a predetermined number of letter candidates for each letter, for example, in descending order of similarity as the letter candidate. When extracting such a letter candidate, the recognition processing section 112 combines letter candidates of each letter to create a word candidate, and calculates similarity between the created word candidate and the address candidate of the destination data, thereby creating a sorting destination information candidate as a letter recognition result. For example, the recognition processing section 112 creates a combination of the letter candidates having the highest similarity as the sorting destination information candidate based on the calculated similarity.

The recognition processing section 112 includes, for example, a central processing unit (CPU), a memory, and a program stored in the memory.

A recognizing process of the sorting destination information candidate by the recognition processing section 112 is performed, for example, on each image acquired from each face of the delivery 102. When one delivery 102 is imaged by the multiple image sensors 101, there is also a case where the same shipping bill L is imaged by the multiple image sensors 101. In this case, the recognition processing section 112 decides that the sorting destination information candidate of the image, from which the combination of the letter candidates having the highest similarity is obtained, among the sorting destination information candidates obtained by performing the recognizing process on the image of each face is the sorting destination information.

The recognition processing section 112 outputs the decided sorting destination information to a sorting device via the result output section 113. The sorting destination input section 114 receives the sorting destination information from the VCS 120.

When the sorting destination recognizing device 110 fails the recognizing process of the sorting destination of the delivery 102, the VCS 120 displays an image. An operator sees the displayed image, recognizes the sorting destination, and inputs the sorting destination information. The VCS 120 receives the input sorting destination information.

The VCS 120 includes an image display section 121 and an operation section 122. The image display section 121 displays the image that is captured by each image sensor 101 and is output from the sorting destination recognizing device 110. The operation section 122 receives input of various pieces of information depending on an operation performed by the operator. For example, the operation section 122 receives input of operation content for at least one image among the multiple images displayed on the image display section 121. The operation content includes, for example, an operation of displaying a detailed image with respect to an image selected from the images displayed on the image display section 121, and an operation of hiding the displayed detailed image (hereinafter, also referred to as an operation of releasing (cancelling) the display of the detailed image). When the detailed image is displayed, for example, with respect to the selected image, an image having higher resolution than resolution of images displayed in parallel on the image display section 121 can be displayed on the image display section 121, or an enlarged image obtained by enlarging a region of a selected part of the images displayed in parallel on the image display section 121 may be displayed as the detailed image. The operation section 122 can use, for example, an input device such as a keyboard or a mouse.

The operation information analysis device 130 records the operation content input to the VCS 120 in a storage device provided therein, and analyzes a malfunction situation of the image sensor 101 based on the recorded information. For example, the operation information analysis device 130 includes an operation information storage section 131 and an operation information analysis section 132. The operation information storage section 131 stores the operation content obtained from the VCS 120 as the operation information. The operation information analysis section 132 diagnoses the malfunction situation of the sensor based on the operation information stored in the operation information storage section 131.

The operation information analysis device 130 performs a process of diagnosing the malfunction situation of the image sensor 101 as an analyzing process based on the operation information that is based on the operation content for selecting the image (or the region) displaying the detailed image from the images displayed in parallel on the image display section 121 and the operation information that is based on the operation content for hiding the detailed image. The malfunction includes, for example, a case where the image sensor 101 captures the image of the delivery 102 without focusing the delivery 102, a case where the image sensor 101 is installed at a position at which the delivery 102 does not pass through the imaging range of the image sensor 101, a case where the image sensor 101 is installed at an angle at which the delivery 102 does not pass through the imaging range of the image sensor 101, and a case where the image sensor 101 has a failure.

The display device 140 is provided as an output section, and displays various pieces of information, including diagnosis and analysis results by the operation information analysis device 130, on a display screen.

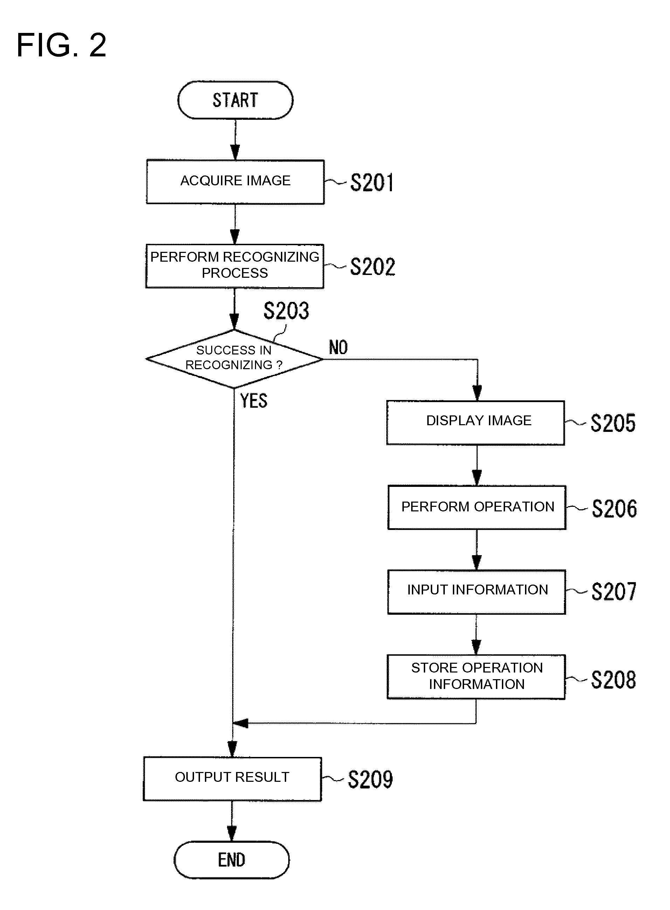

Next, processing of the sensor information management device 10 described above will be described using a flow chart of Fig. 2. First, the delivery 102 is conveyed by the conveying device 103, and the delivery 102 is imaged by each image sensor 101, and an image is created. The image input section 111 acquires the image from each image sensor 101 (step S201). The recognition processing section 112 performs the recognizing process of the sorting destination information in each of the obtained images (step S202). That is, the recognition processing section 112 creates sorting destination information candidates from each of the obtained images, and performs the recognizing process of deciding the sorting destination information among the sorting destination information candidates. When the recognition processing section 112 can normally perform the recognizing process of the sorting destination information (YES in step S203), the recognition processing section 112 outputs the sorting destination information to the sorting device that is a rear stage of the image sensor 101 via the result output section 113. The sorting device conveys and sorts the delivery 102, on which the recognizing process of the sorting destination information is performed, to a sorting port based on the sorting destination information.

On the other hand, when the recognition processing section 112 cannot normally perform the recognizing process of the sorting destination information (No in step S203), the recognition processing section 112 outputs an image on which the recognizing process of the sorting destination information cannot be performed to the VCS 120 via the result output section 113. The image display section 121 of the VCS 120 displays the image output via the result output section 113 on the display screen (step S205). In this case, the image display section 121 displays each of images output via the result output section 113 on one screen in parallel. When each of the images is displayed on the image display section 121, an operator performs an operation for facilitating a visual check of the image from among these images (step S206). This operation is performed, for example, by selecting an image from which the sorting destination information seems to be visually readable, and inputting an instruction of displaying a detailed image from the operation section 122. When the detailed image is displayed, the sorting destination information is visually read from the detailed image by the operator, and the operation corresponding to the read result is input to the operation section 122 by the operator, the operation section 122 acquires the sorting destination information according to the operation (step S207). The operation information analysis device 130 stores the operation content acquired by the operation section 122 (step S208).

When the sorting destination information is input from the operation section 122, the sorting destination recognizing device 110 acquires such sorting destination information by means of the sorting destination input section 114, and outputs the acquired sorting destination information to the sorting device that is the rear stage of the image sensor 101 via the result output section 113. The sorting device conveys and sorts the delivery 102, on which the recognizing process of the sorting destination information is performed, to the sorting port based on the sorting destination information.

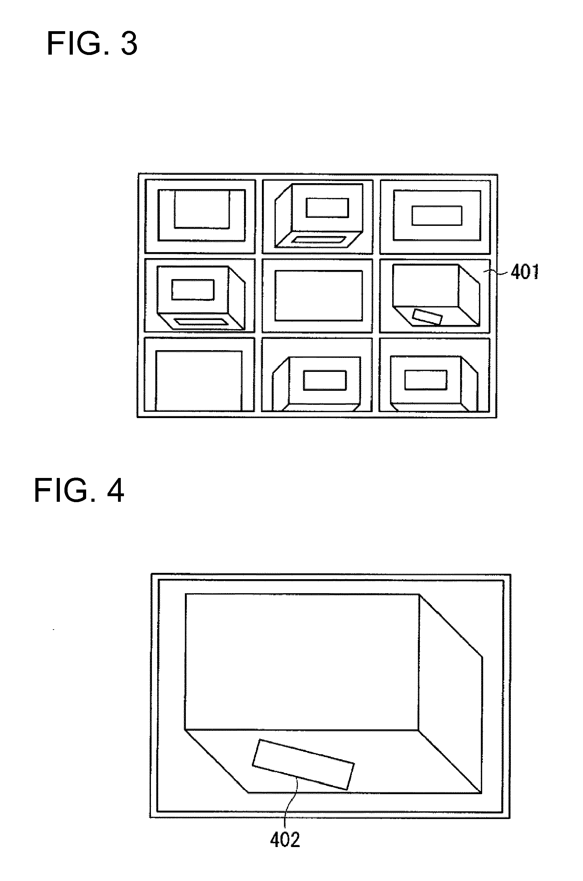

Next, the information displayed on the image display section 121 described above and the operation content input by the operation section 122 will be described. Fig. 3 represents an example of an image displayed on the image display section 121. Particularly, Fig. 3 represents images that are obtained from the respective image sensors 101 and are displayed in parallel on the image display section 121 as a list of images when the recognition processing section 112 cannot normally perform the recognizing process of the sorting destination information. Here, nine types of images such as an image of each face, for example, a top face, a right lateral face, a left lateral face, a front lateral face, a rear lateral face, and a bottom face of the delivery 102 and an image obtained by capturing an image of the delivery 102 in the oblique direction are displayed, for example, as a thumbnail image. An operator selects the thumbnail image that is an image obtained by capturing an image of the shipping bill L in the image list and has a high possibility of visually reading the sorting destination information therefrom, and inputs an instruction of displaying a detailed image of the selected thumbnail image from the operation section 122. The image display section 121 displays the detailed image based on the instruction input from the operation section 122. For example, a new window can be displayed on a screen of the image list, and the detailed image can be displayed within the window. As the detailed image, an image having higher resolution than resolution of the thumbnail image is displayed. For example, the image display section 121 creates a thumbnail image having lower resolution than resolution of the image obtained from the image sensor 101, and displays the thumbnail image as the image list. Then, when the thumbnail image is selected, the image display section 121 displays the image (that is, the detailed image) obtained from the image sensor 101 corresponding to the selected thumbnail image.

Fig. 4 illustrates an example of the detailed image displayed on the image display section 121. Here, for example, a detailed image for an image 401 disposed on the middle right side among the nine images displayed in Fig. 3 is displayed. In Fig. 4, a shipping bill 402 is included in a part of the image. When sorting destination information of the shipping bill 402 is read from the detailed image in a state in which the detailed image is displayed, an operator reads the sorting destination information, inputs the sorting destination information from the operation section 122, and then inputs an instruction of hiding the detailed image from the operation section 122. When the instruction of hiding the detailed image is input from the operation section 122, the image display section 121 closes a window for the detailed image, and hides the detailed image.

On the other hand, contrary to operator's expectation, when the operator cannot read the sorting destination information from the selected detailed image, the operator inputs the instruction of hiding the detailed image from the operation section 122 without inputting the sorting destination information. When the instruction of hiding the detailed image is input from the operation section 122, the image display section 121, closes the window for the detailed image, and displays the image list again. The operator selects an image having the next highest possibility of visually reading the sorting destination information therefrom from among the image list, and inputs an instruction of displaying a detailed image of the selected image from the operation section 122. The image display section 121 displays the detailed image based on the instruction input from the operation section 122.

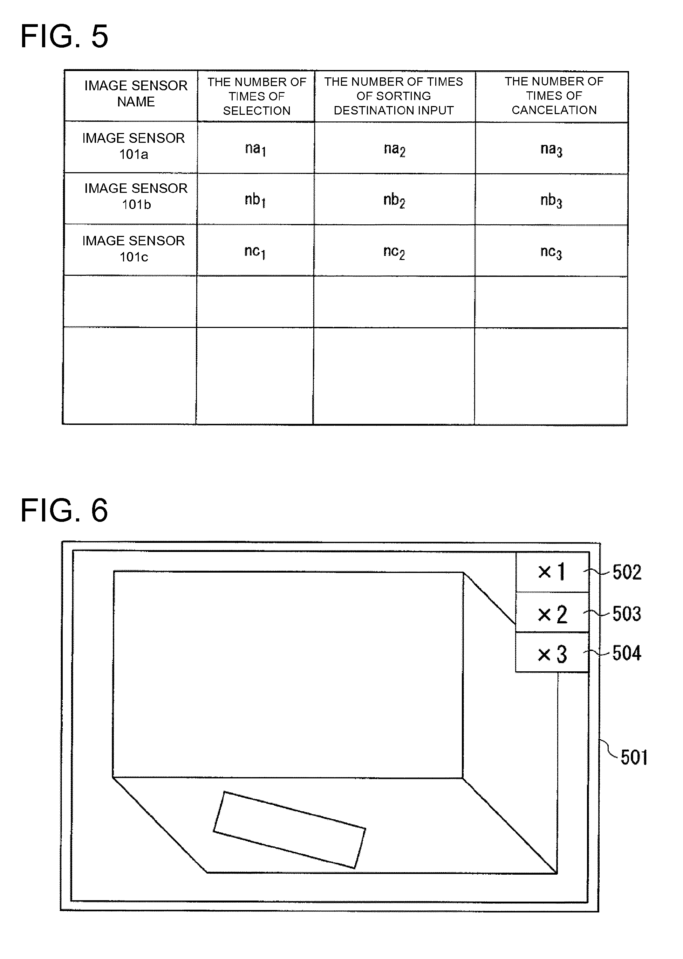

When operation content is input in the VCS 120, the operation information analysis device 130 stores the operation content as the operation information. Fig. 5 illustrates an example of the operation information stored in the operation information storage section 131 of the operation information analysis device 130. The operation information includes the number of times of selection and the number of times of cancelation for each image sensor 101, and can also include the number of times of sorting destination information input. The number of times of selection is the number of times of selection of the image sensor 101 corresponding to the image selected as the image displaying the detailed image from among the listed images. For example, Fig. 5 illustrates that the image sensor 101a is selected na₁ times, and the image sensor 101b is selected nb₁ times. When the same image sensor 101 is selected more than once with respect to the same delivery 102, the number of times of selection may be counted as once by the selection of multiple times or may be counted as once by the selection of each time. The number of times of sorting destination information input is the number of times which the sorting destination information is input based on the detailed image of the selected image. That is, the number of times of sorting destination information input is the number of times which the sorting destination information is input for the image sensor 101 corresponding to the selected image. For example, Fig. 5 illustrates that the number of times of sorting destination information input of the image sensor 101a is na₂ times, and the number of times of sorting destination information input of the image sensor 101b is nb₂ times. The number of times of cancelation is the number of times which an instruction of hiding the detailed image is input after the detailed image of the selected image is displayed, without the sorting destination information being input. That is, the number of times of cancelation is the number of times of input of the instruction of hiding the detailed image with regard to the image sensor 101 corresponding to the selected image without the sorting destination information being input. For example, Fig. 5 illustrates that the number of times of cancelation of the image sensor 101a is na₃ times, and the number of times of cancelation of the image sensor 101b is nb₃ times.

Here, the operation information can also include information other than the number of times of selection, the number of times of sorting destination information input, and the number of times of cancelation. For example, in the case of an interface through which an image is selected by a cursor, the operation information may include cursor position information that represents a position of the cursor in the event of the selection after the image displaying the detailed image is selected and until the instruction of hiding the detailed image is input. Furthermore, the operation information may include the image selected from among the image list and the cancelled image. Furthermore, as the operation in the event of the cancelation, an operator may input different operation content for a reason of the cancelation. For example, the operation information may include information representing an input cancelation reason, for each image sensor 101.

Fig. 6 illustrates an example of an image displayed on the image display section 121 when the reason of cancelation is input. The image display section 121 displays a detailed image 501 on a screen, and also displays a cancel button that inputs an instruction of hiding the detailed image 501 on the screen for each reason to hide the cancel button. For example, a cancel button X1 502 indicates that a cause is a blur of the detailed image, and a cancel button X2 503 indicates that a cause is a stain or an attachment on the shipping bill L of the delivery 102. Furthermore, a cancel button X3 504 indicates that a mistake is made in the operation of selecting the detailed image. The operation information analysis device 130 stores the fact that any of these cancel buttons is selected as the operation information. Here, when a configuration of storing the image together with the operation information is adopted, it may be determined whether or not the image is to be stored, depending on the operation in the event of the cancelation. For example, when the cancel button X1 is depressed due to an image blur, the image is stored because there is a possibility of the sensor malfunction, and when the cancel button X2 is depressed due to a stain or an attachment on the delivery 102, the image is not stored because of a malfunction irrelevant to the image sensor 101. In addition to the foregoing, a cancel button representing that no shipping bill is included in the image (beyond the imaging range), a cancel button representing that the letters described in the shipping bill cannot be read because reflected light is strong, or the like can also be provided as the cancel button.

Next, a flow of the analyzing process of the operation information analysis device 130 will be described. First, in the operation information analysis device 130, the operation information analysis section 132 analyzes the operation information stored in the operation information storage section 131. The operation information analysis device 130 outputs a sensor diagnosis result based on the analysis result of the operation information analysis section 132 to the display device 140, and the display device 140 displays the diagnosis result.

Here, an analyzing process performed by the operation information analysis section 132 and the display of the analysis result which is performed by the display device 140 will be described.

The operation information analysis section 132 determines whether or not a malfunction or a failure is present in each image sensor 101, for example, based on the operation information stored in the operation information storage section 131. The operation information analysis section 132 counts, for example, the number of times X of selection, the number of times Y of sorting destination information input, and the number of times Z of cancelation for each image sensor 101. Furthermore, the operation information analysis section 132 determines that the malfunction is present in the image sensor 101 having X equal to or more than a reference value or having Z/X equal to or more than a reference ratio, based on the counted result.

When the operation information analysis device 130 determines that the malfunction or the failure is present in the image sensor, the display device 140 displays that the malfunction or the failure is present in that image sensor. Depending on an instruction from an operator, the display device 140 outputs an analysis result on a screen in a figure corresponding to the number of times based on information about at least one of the number of times of selection, the number of times of sorting destination information input, and the number of times of cancelation for each image sensor. In the display in a figure, for example, the number of times X of selection, or the ratio (Z/X) of the number of times Z of cancelation to the number of times X of selection can be displayed for each image sensor 101 in a bar graph, a circle graph, or the like. Furthermore, a list of information about each image sensor can also be displayed in a numerical value or by color. The analysis result is displayed in this way in a figure or by color, and thereby an operator can simply grasp a situation in which the image sensor is used in the VCS and determine a malfunction situation of the image sensor.

Furthermore, more specifically, in order to grasp the situation of the image sensor 101 determined to have the malfunction or the failure, the display device 140 may display the image stored in the event of the image selection or in the event of the cancelation. Thereby, the operator can see the image again.

In the first embodiment described above, when the input of the sorting destination information is completed in the state in which the detailed image is displayed, even if the instruction of hiding the detailed image from the operator is not input, the detailed image may be hidden, and next the image list from each image sensor 101 that fails the recognizing process of the sorting destination information may be displayed. Even in this case, the operation information analysis device 130 stores the operation content by which the image displaying the detailed image is selected and the operation content by which it is represented that the input of the sorting destination information based on the detailed image of the selected image is completed in the operation information storage section 136.

Furthermore, in the first embodiment described above, it can also be determined using the input cancel reason whether or not the malfunction is present in the image sensor 101. For example, the operation information analysis section 132 determines whether or not the malfunction is present in the image sensor based on the operation information, which represents the operation content displaying the detailed image, and the cancel reason. For example, when the cancelled reason is merely an operation error of the operator (a case where the image different from the target intended to display the detailed image is selected by mistake when the image from among the image list), a malfunction diagnosis can be made excluding the operation content by which the detailed image of the selected image is selected. Furthermore, the operation information analysis section 132 can count the number of times which the instruction of hiding the detailed image is given for each reason of the cancelation, and use the same for the malfunction diagnosis. Thereby, it is possible to make a diagnosis in which the cancel reason is also taken into account.

According to the first embodiment described above, when the image instructed on the selection or the cancelation is stored together with the operation content as the operation information, the operated image can be referred to after being diagnosed what it is like. Thereby, the reason why it is determined that the malfunction is present can be considered based on the image. Furthermore, how to cope with the malfunction can also be considered based on the stored image. For example, whether to improve the position or the angle of the image sensor 101, whether to reset the focus, or whether to replace the image sensor 101 can be considered.

Furthermore, in the first embodiment described above, since the image list is displayed, the operator can grasp the image from which the sorting destination information is obtained with a high possibility among the images obtained from the multiple image sensors 101, and then can select the image intended to display the detailed image.

Furthermore, in the first embodiment described above, when the detailed image is hidden, the button having the corresponding reason is clicked, thereby to hide the detailed image, so that the reason why the detailed image has not been used for input of the sorting destination information can be collected while reducing a burden on the operator.

Next, a sensor information management device according to a second embodiment will be described with reference to the drawings.

### «Second Embodiment»

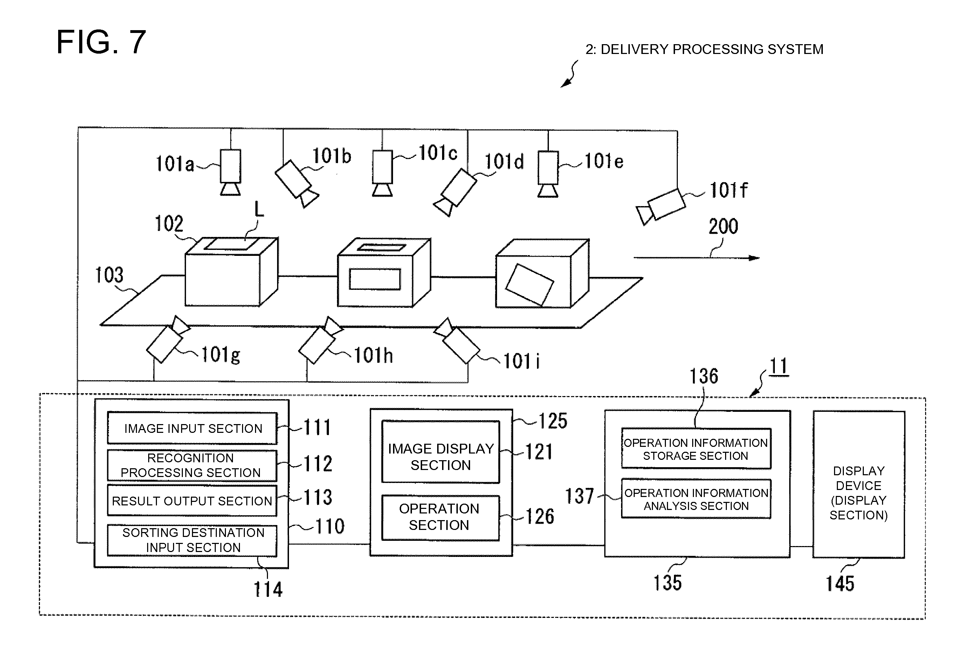

Fig. 7 illustrates a configuration of a delivery processing system 2 to which a sensor information management device 11 in a second embodiment is applied. In the delivery processing system 2, the same configurations as the delivery processing system 1 in the first embodiment are given the same reference numerals, and description thereof will be omitted.

A VCS 125 includes an image display section 121 and an operation section 126. The image display section 121 displays a listed image or a detailed image of an image designated by the operation section 126 in the same way as in the first embodiment. The operation section 126 receives an instruction of selecting a region of interest in the listed image or the detailed image displayed on the image display section 121. For example, when the operation section 126 is a mouse, the operation section 126 follows an instruction from an operator and is dragged, thereby to receive operation content by which a rectangular size or position is changed as a region to be enlarged.

A display device 145 serving as an output section displays an enlarged image obtained by enlarging an image within the region selected by the operation section 126 as the detailed image.

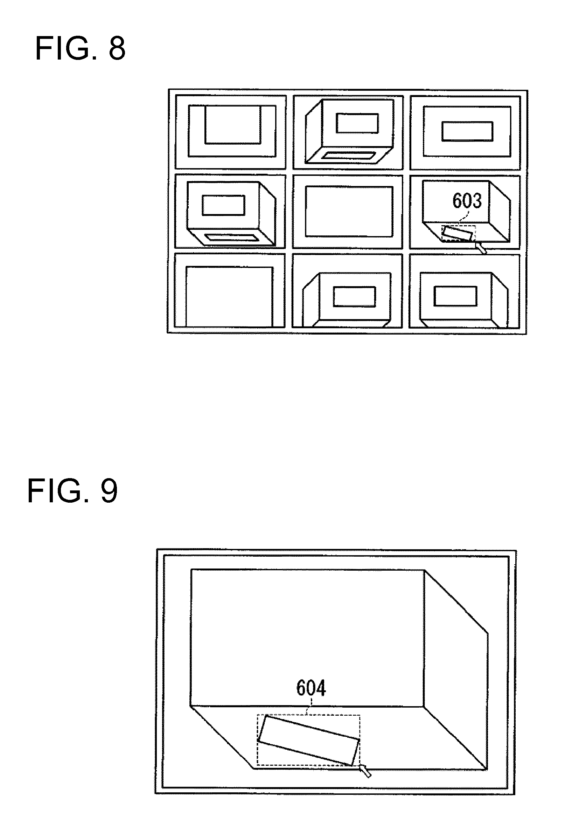

Fig. 8 illustrates an example of a screen when an operation of selecting a region in an image list is performed. In this figure, a region to be enlarged is designated in an image from any image sensor 101. That is, an image from any image sensor 101 is designated, and a region to be enlarged is designated in that image. Here, as the region to be enlarged, a selected region 603 is set so as to enclose a shipping bill of a delivery 102.

Fig. 9 illustrates an example of an image when an operation of selecting a region in the detailed image is performed. In this figure, as the region to be enlarged, a selected region 604 is set so as to enclose the shipping bill of the delivery 102.

The display device 145 enlarges the image within the selected region 603 or 604, and displays the enlarged image in a separate window or the like as the detailed image.

When it is difficult to read sorting destination information by using the enlarged image, the display device 145 hides the enlarged image depending on an instruction from the operation section 126, for example, an operation of a cancel button. Thereafter, when another region is designated as the selected region by following the instruction from the operation section 126, the display device 145 enlarges the designated region and displays an enlarged image. In this case, an operation information storage section 136 of an operation information analysis device 135 can also store a position U of the designated region, the number of times V which an instruction of hiding the detailed image is input after the sorting destination information is input, a time T after the region is designated and until the region is cancelled, an image including the designated region, and an image to which the instruction of hiding the detailed image is input.

An operation information analysis section 137 of the operation information analysis device 135 performs an analyzing process based on these pieces of information stored in the operation information storage section 136. The operation information analysis section 137 determines whether or not a malfunction is present in an image sensor based on a position of the region selected for the image, operation content by which the detailed image for the corresponding image is displayed, and operation content by which the detailed image is hidden. The analyzing process of the operation information analysis section 137, for example, calculates a value of an image quality evaluation index of at least one of a contrast and a degree of sharpness (a degree representing how clear an edge of the image is) of the image within the designated region, and compares the obtained value with a reference value. When the obtained value is equal to or more than the reference value, the analyzing process determines that the malfunction of the image senor is not occurring, and when the obtained value is less than the reference value, the analyzing process determines that the malfunction of the image senor is occurring.

In this way, in the case where the region is selected and the analysis is made based on a selection result of the region, when a dim pattern is present on an outer face of the delivery 102, but the letters described in the shipping bill L located in the selected region are in a normally readable state, it is possible to prevent a determination that the malfunction is present in the image sensor 101 from being made because the degree of sharpness is low.

Furthermore, for example, the operation information analysis section 137 can also accumulate the selected region (reference number 603 in Fig. 8 or reference number 604 in Fig. 9) and the number of times of cancelation of the selected region, and determine that the malfunction is occurring in the image sensor that outputs an image including a region having the large number of times of cancelation. Furthermore, for example, when a position of the selected region (reference number 603 in Fig. 8 or reference number 604 in Fig. 9) selected in expectation of including the sorting destination information is deflecting to the circumference in the image, the operation information analysis section 137 determines that an installation position or an installation angle of the image sensor 101 with respect to the delivery 102 is not suitable, and displays a warning screen corresponding to the determination result on the display device 145. In this warning screen, an outline of the image obtained from the image sensor determined to have the malfunction occurring in the determination result is displayed with a color different from those of outlines of the other images, or a mark or letters representing a warning are displayed in the image circumference. Thereby, an operator can easily grasp whether the image has a possibility of reading the sorting destination information therefrom. Furthermore, in order to grasp in greater detail a situation of the image sensor determined to have the malfunction or the failure, the display device 145 may read the image stored in the event of the region designation or in the event of the cancelation from the operation information storage section 136, and display the image. Thereby, the operator can visually check the image again.

According to the second embodiment described above, since the failure diagnosis is made on the region of the image visually designated by a person, a diagnosis fit for a recognition target portion can be made, compared to a diagnosis on the entire image. That is, when an image is obtained in which a region of a target for grasping the description of the shipping bill L is correctly imaged and in which the other region is blurredly imaged, misinformation caused by determining that a malfunction is present due to a blur of an unnecessary region can be reduced.

Next, a sensor information management device according to a third embodiment will be described.

### «Third Embodiment»

In the third embodiment, the image sensor 101, the sorting destination recognizing device 110, and the conveying device 103 in the first embodiment or second embodiment described above are installed at a distribution center of conveying and sorting the deliveries 102. Furthermore, a VCS 120 or a VCS 125, an operation information analysis device 130 or an operation information analysis device 135, and a display device 140 or a display device 145 are installed at a control center located at a position away from the distribution center.

An analyzing process of an operation information analysis section 132 is performed in the same way as the analyzing process in the first embodiment, and also an analyzing process of an operation information analysis section 137 is performed in the same way as the analyzing process in the second embodiment.

Furthermore, work information of multiple distribution centers may be integrated and subjected to statistical processing and comparison by the operation information analysis device. For example, a relation between selection of an image and a probability of the sensor malfunction or a relation between the number of times of cancelation and the probability of the sensor malfunction may be calculated based on operation information and image information that are obtained at each distribution center. Furthermore, it is also possible to calculate a percentage of the image sensors outputting the image selected at the VCS 120 or the VCS 125 in the image sensors, to detect the image sensor outputting the unselected image, and to review an installation position and angle of the detected image sensor. Furthermore, it is also possible to obtain a correlation between operation information stored in the operation information storage section 131 and a recognition success rate calculated by the operation information analysis section 132, and to review the installation position and angle of the image sensor. Furthermore, it is also possible to obtain a correlation between operation information stored in the operation information storage section 136 and a recognition success rate calculated by the operation information analysis section 137, and to review the installation position and angle of the image sensor. The recognition success rate mentioned here is obtained from a ratio of the number of times which the sorting destination information is input by referring to a detailed image to the number of times which an instruction of displaying the detailed image is given, for each image sensor.

According to the third embodiment described above, the VCS 120 or the VCS 125, the operation information analysis device 130 or the operation information analysis device 135, and the display device 140 or the display device 145 can be installed at a remote place away from the image sensor 101, the sorting destination recognizing device 110, and the conveying device 103. Accordingly, the malfunction can also be detected at a place other than the distribution center, and also conditions of the multiple distribution centers can be controlled at the center.

### «Fourth Embodiment»

In the third embodiment, the VCS 120 is installed at the control center. However, the VCS 120 may be installed at the distribution center. That is, the image sensor 101, the sorting destination recognizing device 110, the VCS 120, and the conveying device 103 in the first embodiment described above are installed at the distribution center, and also the operation information analysis section 132 and the display device 140 are installed at the control center located at a position away from the distribution center.

The at least one embodiment described above, provides a sensor information management device and a sensor information management method capable of improving reliability in a failure diagnosis.

Furthermore, in the at least one embodiment described above, when the instruction of hiding the detailed image is input after any image is selected from the image list and then the detailed image of the selected image is displayed, an operation time after the image is selected and until the instruction of hiding the detailed image is input can also be stored as the operation content. When such an operation time is longer compared with a predefined reference time, it is possible to determine that an operator tries to read the sorting destination information from the detailed image. When the operation time is less than the reference time, it is also possible to determine that there is a mistake in the operation of selecting the image displaying such a detailed image, and not to use such an image for the malfunction determination of the image sensor 101.

Furthermore, in the VCS 120 or the VCS 125 of the at least one embodiment described above, the case of displaying the image list and displaying the detailed image for the image selected from among the image list in another window has been described. However, the image list and the detailed image can also be displayed within one screen. Furthermore, as the instruction of hiding the detailed image, the operation of clicking the cancel button as well as other operations can also be used as the instruction of hiding the detailed image. For example, in the state in which the detailed image is displayed, when another image is selected from among the image list, the previously displayed detailed image may be hidden, and a detailed image of another image selected may be displayed. Thereby, in place of the instruction of hiding the detailed image, an instruction of displaying other detailed images can be used.

According to the sensor information management device in the at least one embodiment described above, an operator can visually select an image, and make a failure diagnosis based on the result of determining a readability of the sorting destination information from the image. According to such a failure diagnosis, reliability of the diagnosis result can be improved compared to a diagnosis based on an automatic recognition result.

Furthermore, according to the sensor information management device in the at least one embodiment described above, the image that becomes an origin of the operation information to be a target for the failure diagnosis is stored together with the operation information. Thereby, it is possible to visually check whether or not the result of the failure diagnosis is correct by collating the stored image with the diagnosis result.

Furthermore, according to the sensor information management device in the at least one embodiment described above, the determination is made using the operation information during input work for the VCS. For this reason, a diagnosis can be made while an operator does not have to do new work for the malfunction diagnosis of the image sensor. Furthermore, it is possible to obtain information about whether or not the malfunction is present in the image sensor without interrupting the input work of the sorting destination information using the VCS.

Furthermore, according to the at least one embodiment described above, when it is determined that the malfunction is present in the image sensor 101, a person in charge of maintenance can also perform maintenance, such as an installation position, an installation angle, adjustment of a focus, and replacement of the image sensor 101, on the image sensor 101 determined to have the malfunction based on the determination result.

Furthermore, in the at least one embodiment described above, the case of the image that is selected with low frequency (or is not selected at all) so as to display the detailed image by an operator among the images captured by the image sensor 101 includes a case where the delivery 102 does not fall within the imaging range of the image sensor 101, or a case where the sorting destination information is recognized by the sorting destination recognizing device 110, depending on the image obtained from the image sensor 101. Thus, based on the operation information stored in the operation information analysis device 130 or the operation information analysis device 135 and the image sensor 101 creating the image used when the sorting destination information is recognized by the sorting destination recognizing device 110, it may be determined that the malfunction is present in the image sensor 101 creating the image in which the sorting destination information is not recognized by the sorting destination recognizing device 110 and creating the image that is not selected so as to display the detailed image by the VCS 120 or the VCS 125. Thereby, it is also possible to determine whether or not the malfunction is present using a history that the operation content is not input by an operator. Note that when no selection is made in the VCS so as to display the detailed image, there are also a case where the malfunction is present in the image sensor 101, and a case where, although no malfunction is present in the image sensor 101, the delivery is conveyed such that a position of the shipping bill L does not fall within the imaging range of the image sensor 101 but fall within the imaging range of the other image sensor 101. For this reason, by referring to the image stored together with the operation information, it is also possible to determine any of the cases.

Furthermore, in the at least one embodiment described above, when, in the VCS, the image obtained from the one image sensor 101 is used for input of the sorting destination information in a certain period of time, but the image obtained from the one image sensor 101 is not used during a subsequent certain period of time and the image obtained from the other image sensor 101 continues to be used, it is also possible to determine that the malfunction is likely to be present in the one image sensor 101. In this case, since the sorting destination information is adapted to be recognized by the sorting destination recognizing device 110, with respect to whether the image has not been used in the VCS or whether the image has not been used because the malfunction occurs, a person in charge of maintenance can also determine whether or not the malfunction is present by referring to the image stored in the operation information analysis device 130 or the operation information analysis device 135. Furthermore, with respect to the number by which the sorting destination information is recognized at the sorting destination recognizing device 110, the image sensor 101 creating the image is counted, and thereby it is also possible to estimate which is the image sensor 101 in which no malfunction occurs based on the number of counts.

Furthermore, in the at least one embodiment described above, it is determined whether or not the malfunction is present in the image sensor 101 based on the history of the operation content of the operator. When the operator input the fact that a failure is present in the image sensor 101, a criterion for determining that the malfunction is present varies for each operator. However, according to the present embodiment, it is possible to avoid a variation in the criterion for the determination, and to make an objective determination with respect to the presence or absence of the malfunction.

Note that a program for realizing at least one of the function of the VCS 120, the function of the operation information analysis device 130, and the function of the display device 140 of Fig. 1, and the function of the VCS 125, the function of the operation information analysis device 135, and the function of the display device 145 of Fig. 7 in each of the above-described embodiment may be recorded on a computer-readable recording medium, and the program recorded on the recording medium may be read into and executed by a computer system, thereby the computer system may be operated as the VCS 120, the operation information analysis device 130, and the display device 140 of Fig. 1, and the VCS 125, the operation information analysis device 135, and the display device 145 of Fig. 7. Note that the "computer system" mentioned here includes an operating system (OS) or hardware such as peripherals. Furthermore, the "computer system" includes a WWW system having a web page providing environment (or displaying environment). Furthermore, the "computer-readable recording medium" refers to a portable medium such as a flexible disk, a magneto-optical disk, a ROM, and a CD-ROM, and a storage device such as a hard disk built in the computer system. Furthermore, the "computer-readable recording medium" includes a medium that holds a program in a given time such as a volatile memory (RAM) inside a computer system that is a server or a client when the program is transmitted via a network such as the Internet or a communication circuit such as a telephone line.

Furthermore, the foregoing program may be transmitted from a computer system having the program stored in a storage device or the like to another computer system via a transmission medium or by a transmitted wave in the transmission medium. Here, the "transmission medium", which transmits a program, refers to a medium having a function of transmitting information, such as a network (communication network) such as the Internet or a communication circuit (communication line) such as a telephone line. Furthermore, the foregoing program may be a program for realizing some of the functions described above. Further, the foregoing program may be a program, a so-called differential file (differential program), capable of realizing the functions described above in combination with a program previously recorded in a computer system.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A sensor information management device comprising:
an image input section (111) configured to obtain an image from each of multiple image sensors (101) which are installed at different positions or different angles from one another and image goods (102);
an image display section (121) configured to display multiple images obtained from the multiple image sensors (101);
an operation section (126) configured to receive input of operation content for at least one image among the multiple images displayed;
an operation information storage section (136) configured to store operation information based on the operation content; and
an output section (113) configured to output the operation information stored in the operation information storage section (136).

2. The sensor information management device according to claim 1, wherein
the operation section (126) is configured to receive input of first operation content for displaying a detailed image of a region of at least part of a designated image from among the multiple images displayed, and input of second operation content for hiding the detailed image displayed,
the operation information storage section (136) is configured to store first operation information based on the first operation content, and second operation information based on the second operation content, and
the image display section (121) is configured to display the detailed image depending on the first operation content, or hides the detailed image depending on the second operation content.

3. The sensor information management device according to claim 2, further comprising an operation information analysis section (132) configured to diagnose a malfunction situation of the image sensor (101) based on the first operation information and the second operation information which are stored in the operation information storage section (136),
wherein the output section (113) is configured to output a diagnosis result obtained by the operation information analysis section (132).

4. The sensor information management device according to claim 3, wherein the operation information analysis section (132) is configured to determine whether or not a malfunction is present in the image sensor (101) based on third operation information indicating that the second operation content is input after the first operation content is input.

5. The sensor information management device according to claim 3 or 4, wherein
the operation section (126) is configured to receive input of a reason to hide the detailed image, and
the operation information analysis section (132) is configured to determine whether or not a malfunction is present in the image sensor (101) based on the second operation information and the reason.

6. The sensor information management device according to any of claims 3 to 5, wherein
based on the number of times (X) which the first operation content for each image sensor (101) is input and the number of times (Z) which the second operation content for each image sensor (101) is input, the operation information analysis section (132) compares Z/X with a predefined reference value, and determines whether or not the Z/X exceeds the reference value, thereby to diagnose whether or not a malfunction is present in the image sensor (101), and
the output section (113) outputs information indicating a warning when it is determined that the Z/X exceeds the reference value.

7. The sensor information management device according to any of claims 2 to 6, wherein
the operation information storage section (136) is configured to store the first operation information together with the image for which the first operation content is input, and
the output section (113) is configured to output the image for which the first operation content is input and the operation information for the image.

8. The sensor information management device according to any of claims 3 to 7, wherein, based on the number of times which the first operation content for each image sensor (101) is input and the number of times which the second operation content for each image sensor (101) is input, the output section (113) outputs information indicating figures corresponding to the respective number of times.

9. The sensor information management device according to any of claims 2 to 8, wherein
the image display section (121) is configured to display the multiple images obtained by the multiple image sensors (101) in parallel; and
the operation section (126) is configured to receive input, which displays an enlarged image of a selected region of a selected image among the images displayed in parallel as a detailed image, as the first operation input..

10. The sensor information management device according to any of claims 2 to 9, wherein the operation section (126) is configured to receive input of operation content which displays an enlarged image of a selected region with respect to the detailed image, which is displayed on the image display device based on the input of the first operation content, as a second detailed image.

11. The sensor information management device according to claim 10, wherein the operation information analysis section (132) is configured to determine whether or not a malfunction is present in the image sensor (101) based on an image quality evaluation index within the selected region.

12. The sensor information management device according to claim 11, wherein the operation information analysis section (132) is configured to determine whether or not a malfunction is present in the image sensor (101) based on a position of the selected region, the first operation content for displaying the detailed image, and the second operation content for hiding the detailed image.

13. The sensor information management device according to any of claims 2 to 12, wherein the detailed image has resolution higher than resolution of the multiple images displayed on the image display section (121).

14. A sensor information management method comprising steps of:
obtaining an image from each of multiple image sensors (101) that are installed at different positions or different angles from one another and image goods (102);
displaying multiple images obtained from the multiple image sensors (101);
receiving input of operation content for at least one image among the multiple images displayed;
storing operation information based on the operation content; and
reading and outputting the operation information based on the operation content stored.
